(19) Europäisches Patentamt / European Patent Office / Office européen des brevets

(11) **EP 3 371 035 B1**

(12) **FASCICULE DE BREVET EUROPEEN**

(45) Date de publication et mention
de la délivrance du brevet:
**16.10.2019   Bulletin 2019/42**

(21) Numéro de dépôt: **16806230.5**

(22) Date de dépôt: **27.10.2016**

(51) Int Cl.:
**B62D 7/15** *(2006.01)*   **B62D 15/02** *(2006.01)*
**B60K 37/06** *(2006.01)*   **B62D 7/14** *(2006.01)*
**B60Q 9/00** *(2006.01)*   **B60R 16/037** *(2006.01)*

(86) Numéro de dépôt international:
**PCT/FR2016/052788**

(87) Numéro de publication internationale:
**WO 2017/077223 (11.05.2017 Gazette 2017/19)**

(54) **DISPOSITIF D'ASSISTANCE POUR LES MANOEUVRES D'ACCOSTAGE AU NIVEAU D'UN QUAI**

VORRICHTUNG ZUR UNTERSTÜTZUNG VON MANÖVERN ZUM PARKEN ENTLANG EINER PLATTFORM

DEVICE TO ASSIST WITH MANOEUVRES FOR PARKING ALONGSIDE A PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.11.2015   FR 1560531**

(43) Date de publication de la demande:
**12.09.2018   Bulletin 2018/37**

(73) Titulaire: **NEWTL (Société par Actions Simplifiée)
67120 Duppigheim (FR)**

(72) Inventeurs:
• **RICHERT, Geoffrey
  67025 Oberhausbergen (FR)**
• **BEBON, Dominique
  67720 Weyersheim (FR)**

(74) Mandataire: **Nuss, Laurent et al
Cabinet Nuss
10, rue Jacques Kablé
67080 Strasbourg Cedex (FR)**

(56) Documents cités:
**EP-A1- 2 390 163     EP-A2- 1 304 278
FR-A1- 2 916 721**

## Description

### Domaine technique

La présente invention se rapporte à véhicule routier comportant un dispositif d'assistance pour les manoeuvres d'accostage au niveau d'un quai.

L'invention concerne tout type de véhicule à essieux articulés, plus particulièrement un véhicule routier de transport en commun de type bus, comportant un dispositif qui assiste le chauffeur lors des manoeuvres d'approche et de départ d'un quai de sorte que le véhicule n'entre pas en collision avec son environnement et qu'il soit au plus près du quai en fin de manoeuvre d'approche.

### Etat de la technique

Il est connu, notamment dans le domaine des véhicules routiers de transport spéciaux, par exemple dans le domaine des grumiers, d'équiper les véhicules avec des essieux directeurs pouvant être commandés par le chauffeur lors des manoeuvres difficiles. Ce type de dispositif est habituellement commandé par une télécommande, avec le chauffeur quittant son poste de conduite pour commander les différents déplacements des essieux depuis l'extérieur du véhicule.

Ce type de dispositif n'est donc pas adapté à la conduite en milieu urbain où il est notamment dangereux pour le chauffeur de quitter son poste de conduite.

Il est également connu d'équiper les véhicules routiers avec diverses capteurs ou caméras permettant d'assister le chauffeur lors des manoeuvres difficiles en lui fournissant de nombreuses informations visuelles ou sonores concernant notamment la présence, la position et la distance des obstacles situés autour de son véhicule.

Parfois, ces capteurs ou caméras sont associés à une intelligence électronique pour commander l'essieu avant du véhicule de manière automatique.

Ainsi, il existe des dispositifs anticollision et des dispositifs de correction de trajectoire qui agissent sur la direction avant du véhicule à grande vitesse afin d'éviter des accidents.

On connait également des dispositifs anticollision et des dispositifs de correction de trajectoire pour des véhicules dont les roues de l'essieu arrière peuvent être légèrement braquées, selon un angle de braquage dont la valeur absolue est habituellement inférieure à 2°. Cet angle de braquage très limité ne permet pas d'assister le chauffeur pour les manoeuvres d'accostage à faible vitesse.

Il n'existe cependant pas de capteurs associés à une intelligence électronique pour commander de manière automatique un essieu arrière directeur d'un véhicule routier en vue d'assister le chauffeur pour les manoeuvres à faible vitesse, notamment les manoeuvres d'accostage au niveau d'un quai.

En effet les manoeuvres d'accostage au niveau d'un quai avec un véhicule routier de transport en commun sont souvent difficiles en milieu urbain. En raison de la présence de piétons susceptibles de marcher sur les emplacements réservés au bus, de voitures mal garées qui empiètent parfois sur ces emplacements au niveau des arrêts de bus, ou d'obstacles urbains divers, il est parfois difficile pour le chauffeur d'effectuer des manoeuvres d'approche et de départ d'un quai de sorte que le véhicule n'entre pas en collision avec son environnement et qu'il soit au plus près du quai en fin de manoeuvre d'approche. FR 2 916 721 A1 est considéré comme l'art antérieur le plus proche.

### Description de l'invention

L'objet de la présente invention vise par conséquent à pallier les inconvénients de l'art antérieur en proposant un nouveau véhicule routier comportant un dispositif d'assistance pour les manoeuvres d'accostage au niveau d'un quai.

Ce dispositif d'assistance est d'un fonctionnement automatique lorsqu'il est enclenché. Ainsi, lors des manoeuvres d'accostage au niveau d'un quai, le chauffeur ne se préoccupe pas du dispositif d'assistance une fois celui-ci activé. Le chauffeur conduit son véhicule de manière classique, en orientant l'essieu directeur avant de manière classique avec son volant, tandis que le dispositif d'assistance de l'invention s'occupe d'orienter un essieu arrière qui est modifié de manière à être directeur, sans que le chauffeur ait à s'en soucier.

Selon cette invention, les roues de l'essieu arrière peuvent être braquées selon un angle dont la valeur absolue est bien supérieure à 2°, par exemple supérieure à 10°, préférentiellement supérieure à 20° et encore plus préférentiellement supérieure à 30°.

Le fait qu'un essieu arrière soit directeur permet au véhicule routier d'effectuer des manoeuvres d'accostage sur une plus courte distance, ce qui est particulièrement avantageux lorsque les emplacements réservés au niveau des arrêts de bus pour les véhicules de transport en commun sont de taille réduite.

Cela permet également d'approcher l'arrière du véhicule au plus près du quai lors des manoeuvres d'approche de sorte que le véhicule soit à la fois au plus près du quai et bien parallèle à celui-ci. Ceci est particulièrement important dans le domaine des véhicules de transport en commun susceptibles de transporter des passagers en chaise roulante, avec des poussettes ou des paniers à roulettes.

Un autre objet de la présente invention vise à proposer un nouveau procédé d'accostage au niveau d'un quai pour un véhicule routier équipé du dispositif d'assistance de l'invention.

Selon l'invention, les objets assignés à l'invention sont atteints à l'aide d'un véhicule routier comportant des roues avant montées sur un essieu avant directeur et des roues arrière montées sur un essieu arrière, caractérisé en ce qu'il comporte un dispositif d'assistance pour les manoeuvres d'accostage au niveau d'un quai et en ce que l'essieu arrière est directeur et équipé d'une direction, le dispositif d'assistance étant prévu pour fonctionner selon un mode routier ou selon un mode accostage et comprenant les moyens suivants :

- un dispositif de pilotage en direction prévu pour commander l'angle de braquage $A_{AR}$ des roues arrière ;
- un capteur de distance prévu à l'arrière du véhicule pour mesurer la distance $D_{ARquai}$ de l'arrière du véhicule par rapport au quai ;

dans lequel :

- en mode routier, soit les roues arrière sont droites, soit leur angle de braquage $A_{AR}$ est commandé par le dispositif de pilotage en direction en fonction de l'angle de braquage $A_{AV}$ des roues avant ;
- en mode accostage, l'angle de braquage des roues arrière est commandé par le dispositif de pilotage en direction en fonction des distances mesurées par le capteur de distance et de l'angle des roues avant $A_{AV}$.

Ainsi, le dispositif d'assistance pilote le braquage des roues arrière de manière entièrement automatique, de manière à optimiser et faciliter les différentes manoeuvres effectuées par le chauffeur lors d'un accostage à un quai.

Selon une variante de l'invention, le dispositif d'assistance comprend en outre les moyens suivants :

- un capteur de distance prévu à l'avant pour mesurer la distance $D_{AVquai}$ de l'avant du véhicule par rapport au quai ;
- un capteur de distance prévu à l'arrière du véhicule pour mesurer la distance $D_{ARenv}$ de l'arrière du véhicule par rapport aux autres obstacles de l'environnement ;

dans lequel :

- en mode routier, soit les roues arrière sont droites, soit leur angle de braquage $A_{AR}$ est commandé par le dispositif de pilotage en direction en fonction de l'angle de braquage $A_{AV}$ des roues avant ;
- en mode accostage, l'angle de braquage des roues arrière est commandé par le dispositif de pilotage en direction en fonction des distances mesurées par les capteurs de distance et en fonction de l'angle de braquage $A_{AV}$ des roues avant.

Ainsi, grâce à des capteurs de distance supplémentaires, le dispositif d'assistance pilote le braquage des roues arrière de manière encore plus optimisée pour faciliter les différentes manoeuvres effectuées par le chauffeur lors d'un accostage à un quai.

Selon un exemple de mise en oeuvre de l'invention, le dispositif d'assistance comprend en outre un capteur de distance prévu à l'avant du véhicule pour mesurer la distance $D_{AVenv}$ de l'avant du véhicule par rapport aux autres obstacles de l'environnement.

Selon un autre exemple de mise en oeuvre de l'invention, les roues arrière peuvent être braquées selon un angle dont la valeur absolue est supérieure à 10°, préférentiellement supérieure à 20° et plus préférentiellement supérieure à 30°. Cet angle de braquage, très supérieur à celui des essieux directeurs arrière existant, permet d'optimiser les différentes manoeuvres d'accostage par rapport aux véhicules de l'art antérieur.

Selon un exemple de mise en oeuvre de l'invention, en mode routier, le dispositif de pilotage en direction commande l'angle de braquage $A_{AR}$ des roues arrière de sorte que les roues arrière sont d'abord droites puis, au-delà d'un certain angle de braquage des roues avant, les roues arrière sont asservies en braquage de manière proportionnelle et linéaire par rapport à la commande de braquage reçue par les roues avant.

Selon un exemple supplémentaire de mise en oeuvre de l'invention, en mode routier l'essieu arrière est fixe avec les roues arrière droites lorsque la vitesse du véhicule est supérieure à la vitesse maximale du mode routier $S_{VAR}$. Ceci permet d'éviter tout risque de comportement dangereux du véhicule lorsque celui-ci roule à une certaine vitesse.

Selon un exemple de mise en oeuvre de l'invention, le dispositif d'assistance bascule automatiquement du mode accostage vers le mode routier lorsque la vitesse du véhicule est supérieure à une vitesse maximale pour l'accostage $V_{MAXaccostage}$ ou lorsque l'angle de braquage $A_{AV}$ des roues avant est supérieur à un angle $\alpha_{SortieAccostage}$ de braquage de sortie d'accostage. Ceci permet notamment d'éviter tout risque de comportement dangereux du véhicule lorsque celui-ci roule à une certaine vitesse.

Selon un exemple autre de mise en oeuvre de l'invention le dispositif d'assistance comprend des capteurs permettant de mesurer l'angle de braquage $A_{AV}$ des roues avant et l'angle de braquage $A_{AR}$ des roues arrière. Ces capteurs permettent de donner des informations nécessaires au fonctionnement du dispositif d'assistance, notamment en mode routier.

Selon cet exemple de mise en oeuvre de l'invention, lorsque l'essieu avant comporte un boitier de direction, et en ce que l'angle de braquage $A_{AV}$ des roues avant peut être mesuré par un capteur d'angle qui est relié à ce boitier de direction.

De même, lorsque le dispositif de pilotage en direction comprend un actionneur à tige mobile, l'angle de braquage $A_{AR}$ des roues arrière peut être mesuré par un capteur de position relié à l'actionneur du dispositif de pilotage en direction, l'angle de braquage $A_{AR}$ des roues arrière étant calculé en fonction de la position de la tige de l'actionneur.

Selon un exemple de mise en oeuvre de l'invention, les capteurs de distance sont prévus sur le côté droit du véhicule, notamment dans le cas où le véhicule est prévu pour circuler à droite.

Selon un autre exemple de mise en oeuvre de l'invention, les capteurs de distance prévus à l'avant du véhicule sont prévus devant les roues avant, le capteur de distance au quai prévu à l'arrière du véhicule est prévu devant les roues arrière, et le capteur d'environnement arrière est prévu à l'arrière des roues arrière. Ceci permet aux capteurs d'être situés au plus près des obstacles qu'ils doivent détecter.

Selon un exemple supplémentaire de mise en oeuvre. de l'invention, les informations de distance à l'avant et à l'arrière qui sont reçues par les capteurs de distance sont transmises au chauffeur de manière visuelle, ce qui l'aide dans sa conduite.

Selon un exemple de mise en oeuvre de l'invention, le dispositif d'assistance comprend un commutateur de mode accostage/routier qui fait basculer le dispositif d'assistance du mode routier en mode accostage et inversement lorsqu'il est actionné.

Selon cet exemple de mise en oeuvre de l'invention, le commutateur de mode accostage/routier peut être actionné manuellement par le chauffeur au moyen d'un bouton prévu dans le poste de conduite du véhicule.

Le commutateur de mode accostage/routier peut également être actionné par un dialogue sans contact entre l'infrastructure et le véhicule. Ainsi le chauffeur n'a pas besoin de se préoccuper d'actionner le commutateur de mode accostage/routier, cela se fait automatiquement par exemple lorsque le véhicule s'approche ou s'éloigne d'un quai équipé d'un dispositif de dialogue sans contact avec le véhicule.

Selon un exemple de mise en oeuvre de l'invention, le commutateur de mode accostage/routier ne permet pas de faire basculer le dispositif d'assistance du mode routier en mode accostage tant que le véhicule roule à une vitesse supérieure à la vitesse maximale pour l'accostage $V_{MAXaccostage}$. Ceci permet d'éviter tout risque de comportement dangereux du véhicule lorsque celui-ci roule à une certaine vitesse.

Selon un exemple de mise en oeuvre de l'invention, le dispositif d'assistance comprend également une intelligence embarquée qui pilote le dispositif de pilotage en direction de l'essieu arrière.

Cette intelligence embarquée est par exemple connectée aux capteurs de distance, aux capteurs permettant de mesurer l'angle de braquage $A_{AV}$ des roues avant et l'angle de braquage $A_{AR}$ des roues arrière, et au commutateur de mode accostage/routier.

L'intelligence embarquée peut comporter une mémoire dans laquelle sont stockées les formules mathématiques utilisées par le dispositif d'assistance pour commander l'angle de braquage des roues arrière en mode routier et en mode accostage, ainsi que les valeurs des constantes utilisées dans ces formules.

Les objets assignés à l'invention sont atteints également à l'aide d'un procédé d'accostage à un quai pour un véhicule routier tel que décrit précédemment, caractérisé en ce qu'il comprend les étapes successives suivantes :

a) une phase de roulage, lorsque le véhicule circule de manière classique, dans laquelle le dispositif d'assistance est basculé en mode routier et dans laquelle les roues arrière sont droites ou asservies à la direction avant ;

b) une phase d'approche, lorsque le véhicule débute son accostage à un quai, dans laquelle le dispositif d'assistance est basculé en mode accostage, dans laquelle les roues arrière restent en mode routier tant que le détecteur de distance avant n'a pas détecté le quai, et dans laquelle, lorsque le détecteur de distance avant détecte le quai, les roues arrière sont pilotées par le dispositif d'assistance et braquées de sorte que l'essieu arrière soit déplacé en direction du quai ;

c) une phase d'arrêt, lorsque le véhicule est accosté à quai ;

d) une phase de départ, lorsque le véhicule quitte le quai, dans laquelle le dispositif d'assistance est basculé en mode accostage et dans laquelle les roues arrière sont braquées de sorte que l'essieu arrière soit déplacé en éloignement du quai ;

e) une phase de roulage, lorsque le véhicule circule de manière classique après avoir terminé de quitter le quai, dans laquelle le dispositif d'assistance est basculé en mode routier et dans laquelle les roues arrière sont droites ou asservies à la direction avant.

Selon ce procédé d'accostage, au cours de la phase d'arrêt, lorsque le véhicule est accosté à quai, les roues arrière peuvent être pilotées de manière à être ramenées en position non braquées. En effet, cela permet au véhicule d'être au plus près du quai, et des roues braquées peuvent parfois gêner l'ouverture des portes latérales dudit véhicule.

Ce procédé facilite considérablement les manoeuvres d'accostage pour le chauffeur. Cet accostage est ainsi optimisé de manière automatique par le dispositif d'assistance, permettant notamment au véhicule d'accoster de manière parallèle et proche d'un quai de manière bien plus aisée, sécuritaire et sur une distance bien plus courte qu'avec les véhicules classiques.

Grâce à l'invention, la lacune est réduite entre le véhicule et le quai pour un accès facilité au véhicule. La distance au quai étant maîtrisée, les flancs des roues ne viennent plus frotter contre le quai, ce qui empêche leur usure prématurée.

De même, la longueur nécessaire pour la réalisation de l'accostage est réduite, ce qui permet au véhicule d'accoster même lorsque la place disponible serait trop faible pour un véhicule classique.

Par l'optimisation du temps et du nombre de manoeuvres nécessaire pour un accostage, l'invention permet également d'optimiser la consommation en carburant du véhicule.

Enfin, les capteurs de l'invention permettent une assistance visuelle à la conduite qui est indépendante de la météo et de la visibilité.

## Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :

- la figure 1 est un graphique illustrant la loi mathématique donnant l'angle de braquage des roues arrière par rapport à l'angle de braquage des roues avant lorsque l'essieu arrière fonctionne en mode routier ;
- la figure 2 est une vue schématique illustrant un véhicule routier équipé d'un dispositif d'assistance pour les manoeuvres d'accostage au niveau d'un quai selon une première variante de l'invention ;
- la figure 3 est une vue schématique illustrant un véhicule routier équipé d'un dispositif d'assistance pour les manoeuvres d'accostage au niveau d'un quai selon une seconde variante de l'invention ; et
- les figures 4 à 11 sont des vues schématiques illustrant les manoeuvres d'approche et de départ d'un quai pour un véhicule routier équipé d'un dispositif d'assistance selon l'invention, sur lesquelles la trajectoire de l'essieu avant est représentée en pointillés.

## Mode(s) de réalisation de l'invention

Les éléments structurellement et fonctionnellement identiques présents sur plusieurs figures distinctes, sont affectés d'une même référence numérique ou alphanumérique.

Le dispositif d'assistance (1) pour les manoeuvres d'accostage au niveau d'un quai (2) selon l'invention est prévu pour un véhicule routier (3) comportant un essieu avant directeur (4) équipé d'une direction (6) classique actionnée par le volant du véhicule (3). La direction avant (6) est par exemple assistée par un boîtier de direction à assistance hydraulique à assistance variable (non représenté).

Dans la suite de ce descriptif, pour des raisons de commodité, nous avons utilisé le terme "quai" afin de désigner tout type de bordure, d'emmarchement d'accès au véhicule ou tout autre moyen physique, fixe, ou mobile par rapport au sol, sur lequel les voyageurs se tiennent debout avant d'embarquer dans un véhicule. Aussi, le terme "quai" ne devra pas être interprété de manière limitative, mais comme se rapportant à tout type similaire de bordure.

Le dispositif d'assistance (1) de l'invention est préférentiellement prévu pour un véhicule routier (3) de transport en commun, par exemple un bus, mais il peut être adapté à tout type de véhicule routier (3).

Le dispositif d'assistance (1) selon l'invention est également prévu pour faire fonctionner l'essieu arrière (5) d'un véhicule routier (3) selon deux modes, à savoir un mode routier et un mode accostage. Selon l'invention, l'essieu arrière (5) est aussi directeur et équipé d'une direction (7), mais il n'est pas commandé par le chauffeur du véhicule routier (3). En effet, la direction arrière (7) est entièrement pilotée de manière automatique par le dispositif d'assistance (1) selon l'invention.

Afin de piloter l'angle de braquage des roues arrière (9) dans ses deux modes de fonctionnement, le dispositif d'assistance (1) selon l'invention comprend un dispositif de pilotage en direction (10) de l'essieu arrière (5). Ce dispositif de pilotage en direction (10) comprend un actionneur, préférentiellement sous la forme d'un vérin hydraulique associé à un distributeur proportionnel, ou sous la forme d'un vérin électrique.

De manière générale, en mode routier, les roues arrière (9) sont d'abord droites puis, au-delà d'un certain angle de braquage des roues avant (11), les roues arrière (9) sont asservies en braquage de manière proportionnelle par rapport à la commande de braquage reçue par les roues avant (11).

Selon une variante moins avantageuse de l'invention, en mode routier les roues arrière (9) sont toujours droites, à la manière d'un véhicule classique.

Par roues droites, on entend des roues qui ne sont pas braquées, c'est-à-dire avec un angle de braquage de 0° correspondant à des roues alignées dans le sens longitudinal du véhicule.

En mode accostage, l'angle de braquage des roues arrière (9) est commandé par le dispositif d'assistance (1) en fonction des distances du véhicule (3) par rapport au quai (2) et aux autres obstacles de l'environnement.

Les deux modes de fonctionnement du dispositif d'assistance (1) de l'invention vont maintenant être décrits de manière plus détaillée.

Mode routier

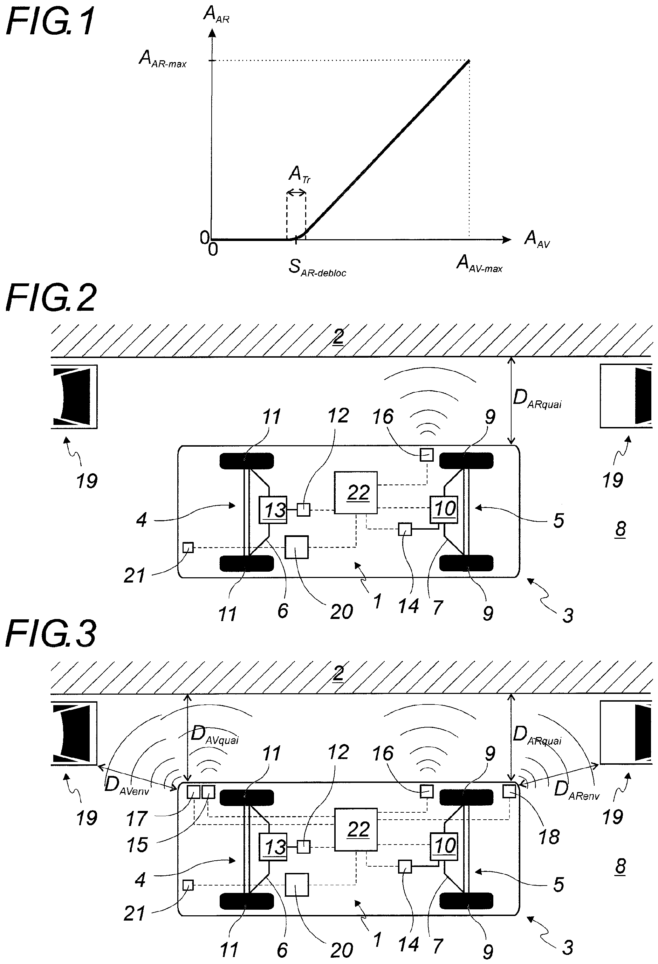

En mode routier, l'essieu arrière (5) est prévu pour le roulage normal du véhicule (3) sur la chaussée (8), selon une vitesse maximale respectueuse des limitations de vitesse du code de la route. Dans ce mode, les roues arrière (9) sont asservies à la position des roues avant (11) par une loi mathématique tenant compte de l'angle de braquage des roues avant (11). Cette loi mathématique régissant le mode routier est représentée sur la figure 1.

En mode routier, le véhicule (3) peut circuler à une vitesse dont la grandeur est incompatible avec les manoeuvres nécessaires lors de l'accostage à un quai (2). Par exemple, bien que cela puis être autorisé par le code de la route, il n'est pas envisageable pour un véhicule (3) d'accoster à un quai à une vitesse de 50 km/h.

En mode routier, les roues arrière (9) sont droites jusqu'à ce que les roues avant (11) soient braquées dans un sens ou dans l'autre au-delà d'un certain angle, désigné en tant que seuil de déblocage $S_{AR\text{-}debloc}$, à partir duquel les roues arrière (9) sont braquées automatiquement par le dispositif d'assistance (1) de l'invention selon un angle de braquage proportionnel à celui des roues avant (11).

Ainsi, comme cela est représenté sur la figure 1, lorsque l'angle de braquage $A_{AV}$ des roues avant (11) atteint le seuil $S_{AR\text{-}debloc}$, les roues (9) de l'essieu arrière (5) sont également braquées, selon un angle $A_{AR}$ proportionnel à l'angle de braquage $A_{AV}$ des roues avant (11).

Selon un mode de réalisation préféré de l'invention, l'asservissement des roues arrière (9) aux roues avant est effectué de manière progressive, ce qui se traduit par une courbe au niveau de la transition entre la position droite des roues arrière (9) et leur position asservie en braquage. Cette transition est obtenue par une loi de type polynomial de degré 2.

Les lois mathématiques régissant le mode routier sont données ci- dessous :

$$\text{Si } |A_{AV}| < A_{AV\text{-}max} \times S_{AR\text{-}debloc} - \frac{A_{Tr}}{2}$$

alors

$$A_{AR} = 0$$

$$\text{Si } |A_{AV}| \geq A_{AV\text{-}max} \times S_{AR\text{-}debloc} + \frac{A_{Tr}}{2}$$

alors

$$A_{AR} = k_{x^2} \times \text{sign}(A_{AV}) \times (|A_{AV}| - A_{AV\text{-}max} \times S_{AR\text{-}debloc} - \frac{A_{Tr}}{2})^2$$

$$\text{Si } |A_{AV}| \geq A_{AV\text{-}max} \times S_{AR\text{-}debloc} + \frac{A_{Tr}}{2}$$

alors

$$A_{AR} = A_{AR\text{-}max} \times \text{sign}(A_{AV}) \times \frac{|A_{AV}| - A_{AV\text{-}max} \times S_{AR\text{-}debloc}}{A_{AV\text{-}max} - A_{AV\text{-}max} \times S_{AR\text{-}debloc}}$$

avec :

$$k_{x^2} = \frac{\frac{A_{AR-max} \times A_{Tr}}{2 \times (A_{AV-max} - A_{AV-max} \times S_{AR-debloc})}}{A_{Tr}^2}$$

dans lesquelles les termes utilisés ont la signification suivante :

- $A_{AV}$ : angle de braquage des roues avant (11), exprimé en degrés
- $A_{AV-max}$ : angle de braquage maximal des roues avant (11), exprimé en degrés
- $A_{AR}$ : angle de braquage des roues arrière (9), exprimé en degrés
- $A_{AR-max}$ : angle de braquage maximal des roues arrière (9), exprimé en degrés
- $A_{Tr}$ : plage d'angle pour la transition, exprimée en degrés,
- $S_{AR-debloc}$ : seuil de déblocage des roues arrière (9), exprimé en pourcentage.

Dans le cadre de ce descriptif, on considère qu'un angle de braquage de 0 pour des roues correspond à des roues droites, alignées selon l'axe longitudinal du véhicule.

L'angle de braquage maximal $A_{AR-max}$ des roues arrière (9) dépend de manière intrinsèque du véhicule (3) et de sa construction. Il est habituellement compris environ entre -35° et +35°.

L'angle de braquage $A_{AV}$ des roues avant (11) est préférentiellement mesuré par un capteur d'angle (12) qui est relié au boitier de direction (13) de l'essieu avant (4), tandis que l'angle de braquage $A_{AR}$ des roues arrière (9) est préférentiellement mesuré par un capteur de position (14) relié à l'actionneur du dispositif de pilotage en direction (10) pour en mesurer le déplacement linéaire. Au moyen d'un régulateur proportionnel intégral dérivé (PID) le capteur de position (14) calcule alors l'angle de braquage $A_{AR}$ des roues arrière (9) en fonction de la position de la tige de l'actionneur.

Selon une variante de l'invention (non représentée), l'angle de braquage $A_{AV}$ des roues avant (11) est mesuré par un capteur d'angle qui est logé dans le pivot d'au moins une des roues avant (11), tandis que l'angle de braquage $A_{AR}$ des roues arrière (9) est mesuré par un capteur d'angle qui est logé dans le pivot d'au moins une des roues arrière (9).

La plage d'angle pour la transition $A_{Tr}$ est comprise entre 0° et 40°. Par défaut, elle est de 6° mais peut être affiné de manière empirique par des essais en situation réelle pour chaque type de véhicule (3).

Le seuil de déblocage $S_{AR-debloc}$ des roues arrière (9) est choisi en fonction du degré de pilotage voulu pour l'essieu arrière (5). Plus ce seuil $S_{AR-debloc}$ est faible, plus le chauffeur peut avoir l'impression que l'arrière du véhicule (3) «balaye» de trop. Au contraire, plus ce seuil $S_{AR-debloc}$ est élevé, plus la sensation de conduite s'approche de celle d'un véhicule classique dépourvu de dispositif d'assistance (1) pour les manoeuvres d'accostage et plus le mouvement de volant est important. Le seuil de déblocage $S_{AR-debloc}$ des roues arrière (9) est préférentiellement choisi à 25%, mais peut par exemple être supérieur à 25%, la valeur définitive retenue pouvant être obtenue de manière empirique par des essais en situation réelle pour chaque type de véhicule (3).

En mode routier, il est également possible d'asservir les roues arrière (9) par une loi mathématique modifiée tenant compte de la vitesse du véhicule (3).

Selon cette loi mathématique modifiée, l'angle de braquage $A_{AR}$ des roues arrière (9) est multiplié par un coefficient $k_{vit}$ qui dépend de la vitesse du véhicule, selon les formules suivantes :

$$A'_{AR} = A_{AR} * k_{vit}$$

avec :

$$k_{vit} = \max (0 \; ; \min(1 \; ; (P_v * V) + (-S_{VAR} * p_v))$$

dans lesquelles les termes utilisés ont la signification suivante :

- $A_{AR}$ : angle de braquage des roues arrière (9), exprimé en degrés et calculé selon les lois mathématiques précédentes
- $A'_{AR}$ : angle de braquage des roues arrière (9), tenant compte de la vitesse, exprimé en degrés
- $A_{AV}$ : angle de braquage des roues avant (11), exprimé en degrés
- $p_v$ : pente de l'asservissement en vitesse, compris entre -1 et 0
- $S_{VAR}$ : vitesse maximale du mode routier, exprimé en km/h.
  V : Vitesse du véhicule, exprimé en km/h

La vitesse maximale du mode routier $S_{VAR}$ représente la vitesse maximale au-delà de laquelle l'essieu arrière (5) est fixe avec les roues arrière (9) droites (0°) lorsque le dispositif d'assistance (1) est en mode routier. En effet, au-delà d'une certaine vitesse du véhicule (3), on considère qu'il serait dangereux que l'essieu arrière (5) soit directeur car cela pourrait provoquer une instabilité du véhicule (3) au niveau de l'arrière lorsque le chauffeur prend un virage. La vitesse maximale du mode routier $S_{VAR}$ est de 40 km/h par défaut en milieu urbain, mais peut être affinée de manière empirique par des essais en situation réelle pour chaque type de véhicule (3) en tenant compte des spécificités du parcours sur lequel il est prévu pour circuler.

La pente de l'asservissement en vitesse est comprise entre -1 et 0. Par défaut elle est égale à -0,1 mais peut être affinée de manière empirique par des essais en situation réelle pour chaque type de véhicule (3).

Mode accostage

En mode accostage, l'essieu arrière (5) est prévu pour faciliter l'accostage d'un véhicule (3) à vitesse réduite au niveau d'un quai (2). Dans ce mode, le braquage des roues (9) de l'essieu arrière (5) est piloté automatiquement par le dispositif d'assistance (1) selon l'invention, avec un angle important permettant l'optimisation de l'accostage du véhicule (3) au quai (2).

En mode accostage, le véhicule (3) doit circuler à une vitesse réduite qui est compatible avec les manoeuvres nécessaires lors de l'accostage à un quai (2). En effet, lorsqu'un véhicule accoste à un quai, il roule généralement doucement afin de ne pas entrer en collision avec son environnement.

Cette vitesse réduite permet également d'assurer la mise en sécurité du dispositif d'assistance (1) en cas de défaut de fonctionnement.

Afin d'optimiser l'accostage du véhicule (3), le dispositif d'assistance (1) selon l'invention comprend différents capteurs qui permettent de localiser le véhicule (3) par rapport à son environnement, notamment par rapport aux autres véhicules, et par rapport au quai (2) au niveau duquel le chauffeur souhaite accoster.

On notera que certains quais ne sont pas équipés de bordures spécifiques et que dans ce cas c'est le trottoir qui fait office de quai (2). Aussi, un quai peut-être de la même hauteur qu'un trottoir et il n'est pas possible de distinguer quai (2) et trottoir en terme de hauteur. Pour d'autres quais (2), au contraire, le trottoir peut être situé plus haut ou plus bas que le quai (2).

Selon une première variante de l'invention représentée sur la figure 2, le dispositif d'assistance (1) comprend au moins un capteur de distance (16) situé à l'arrière du véhicule (3) et prévu pour détecter et mesurer spécifiquement la distance $D_{ARquai}$ de l'arrière du véhicule (3) au quai (2).

Selon une seconde variante de l'invention représentée sur la figure 3, le dispositif d'assistance (1) comprend également au moins un capteur de distance (17) situé à l'avant et au moins un capteur de distance (18) situé à l'arrière, chacun étant prévu pour détecter et mesurer la distance $D_{AVenv}$, $D_{ARenv}$ aux autres obstacles de l'environnement (voitures, piétons, etc.). Selon cette seconde variante de l'invention, le dispositif d'assistance (1) comprend aussi au moins un capteur de distance (15) situé à l'avant du véhicule (3) et prévu pour détecter et mesurer spécifiquement la distance $D_{AVquai}$ au quai (2) à l'avant du véhicule (3).

Le capteur de distance (17) à l'environnement situé à l'avant peut être optionnel car le dispositif d'assistance (1) selon l'invention ne tient pas compte de cette distance pour piloter le braquage des roues arrière (9) et le chauffeur n'a pas besoin de cette information si la visibilité est bonne car il peut l'estimer lui-même depuis son poste de conduite.

Dans ces deux variantes de l'invention, les capteurs de distance (15, 16, 17, 18) peuvent être de tout type. Il peut ainsi s'agir de dispositifs radar, laser, infra-rouge, ultrasonore ou optique, comme les caméras.

De même, dans ces deux variantes, en plus de mesurer la distance entre le quai (2) et le véhicule (3), les capteurs de distance (15, 16) au quai peuvent également être prévus pour mesurer la hauteur des obstacles, notamment la hauteur du quai (2). Ceci permet par exemple, dans le cas des véhicules de transport en commun, d'ajuster la hauteur du véhicule (3) en fonction de celle du quai (2) afin que le plancher du véhicule (3) soit au même niveau que celui-du quai (2).

Ainsi, on peut envisager d'utiliser les capteurs de distance (15, 16) au quai, ou d'autres capteurs spécifiques, afin de mesurer la hauteur du quai de sorte que le véhicule (3) puisse ajuster sa hauteur et/ou déployer une rampe lorsque nécessaire dans le but de faciliter la montée et la descente des passagers. Cet ajustement de la hauteur du véhicule (3) est par exemple effectué en agissant sur les suspensions de celui-ci. L'ajustement en hauteur du véhicule (3) peut être automatique lors de la phase d'arrêt du véhicule (3) et/ou être déclenché manuellement par le chauffeur ou les usagers, par exemple au moyen d'un bouton situé à l'extérieur du véhicule de manière à être accessible pour une personne handicapée en chaise roulante.

Dans le cas de la sus-mentionnée variante de l'invention, les capteurs de distance (15, 17) prévus à l'avant du véhicule (3), en plus de mesurer la distance $D_{AVquai}$ de l'avant du véhicule (3) par rapport au quai (2) et la distance $D_{AVenv}$ de l'avant du véhicule (3) par rapport aux autres obstacles de l'environnement pour commander le braquage des roues arrière (9) de manière optimisée, procurent également une aide à la conduite pour le chauffeur. En effet, par un retour d'information progressif, de préférence visuel, le chauffeur peut optimiser le placement des roues avant (11) qu'il dirige à l'aide du volant du véhicule (3).

Grâce aux informations des capteurs de distance (16, 18) et du capteur d'angle des roues (14) prévus à l'arrière du véhicule (3), le chauffeur reçoit en outre également des informations concernant l'angle de braquage $A_{AR}$ des roues arrière (9), concernant la distance $D_{ARquai}$ de l'arrière du véhicule (3) par rapport au quai (2), et concernant la distance $D_{ARenv}$ de l'arrière du véhicule (3) par rapport aux autres obstacles de l'environnement pour un accostage encore plus optimisé.

Dans le cas de la seconde variante de l'invention, pour l'avant et l'arrière, un même capteur de distance peut remplir à la fois la fonction d'un capteur de distance (15, 16) prévu pour détecter et mesurer spécifiquement la distance $D_{ARquai}$, $D_{AVquai}$ au quai (2) et celle d'un capteur (17, 18) prévu pour détecter et mesurer la distance $D_{ARenv}$, $D_{AVenv}$ aux autres obstacles de l'environnement.

Le plus souvent, il s'agit cependant de capteurs de distance distincts, car les capteurs (15, 16) prévus pour détecter et mesurer spécifiquement la distance $D_{ARquai}$, $D_{AVquai}$ au quai (2) ne sont pas forcément situés à la même hauteur sur le véhicule (3) que les capteurs (17, 18) prévus pour détecter et mesurer la distance $D_{ARenv}$, $D_{AVenv}$ aux autres obstacles de l'environnement. Ainsi, les capteurs de distance (15, 16) prévus pour détecter et mesurer spécifiquement la distance $D_{ARquai}$, $D_{AVquai}$ au quai (2) peuvent être prévus à un niveau plus bas que les capteurs de distance (17, 18) prévus pour détecter et mesurer la distance $D_{ARenv}$, $D_{AVenv}$ aux autres obstacles de l'environnement.

En effet, certains obstacles de l'environnement, tel que le bas de caisse d'une automobile (19) située sur la chaussée (8) par exemple, peuvent être situés plus haut que le quai (2), mais sans toucher le sol et ne seraient pas détectés par un capteur de distance situé trop bas, tandis que d'autres obstacles de l'environnement peuvent être situés plus bas que le quai (2) et ne seraient pas détectés par un capteur de distance situé trop haut.

Selon une autre variante de l'invention, on peut envisager une redondance des capteurs (15, 16, 17, 18), par exemple en prévoyant des capteurs de distance (17, 18) à l'environnement et/ ou des capteurs de distance (15, 16) au quai prévus à la fois à l'avant et à l'arrière des roues (9, 11) du véhicule (3).

Pour un véhicule de transport en commun prévu pour circuler du côté droit de la chaussée (8), les capteurs de distance (15, 16, 17, 18) de l'invention sont prévus sur le côté droit du véhicule (3).

Préférentiellement, les capteurs de distance avant (15, 17) de l'invention sont prévus devant les roues avant (11), tandis que le capteur arrière de distance au quai (16) est prévu devant les roues arrières (9) et que le capteur de distance à l'environnement arrière (18) est prévu derrière les roues arrières (9).

Les capteurs de distance au quai (15, 16) sont préférentiellement prévus devant les roues (9, 11) car l'accostage du véhicule (3) se fait généralement en marche avant.

Les capteurs de distance à l'environnement (17, 18) sont préférentiellement situés au niveau des extrémités avant et arrière du véhicule (3) afin d'être situés au plus près des obstacles de l'environnement qu'ils doivent détecter.

En complément au capteur de distance à l'environnement arrière (18), un second capteur optionnel (non représenté) du même type peut être installé à l'avant des roues arrières (9) de façon à améliorer la précision de détection de l'environnement.

De manière générale, les capteurs de distance (15, 16, 17, 18) sont prévus sur le véhicule (3) de manière à détecter et localiser au mieux les obstacles de sorte que le véhicule routier (3) n'entre pas en collision avec son environnement, et que, lors de la phase d'approche du quai (2), l'angle de braquage $A_{AR}$ des roues arrière (9) soit optimisé afin que les roues (9, 11) du véhicule (3) n'entrent pas en collision avec le quai (2), que l'arrière du véhicule (3) ne s'approche pas plus vite du quai (2) que l'avant du véhicule (3) et que le véhicule (3) se retrouve parallèle au quai (2) en fin de phase d'approche, avec les essieux avant (6) et arrière (5) situés au plus près du quai (2).

Les informations de distance qui sont reçues par les capteurs de distance (15, 16, 17, 18) situé à l'avant et à l'arrière du véhicule (3) sont transmises au chauffeur, de préférence de manière visuelle, et non sonore en raison du bruit ambiant habituellement rencontré dans les véhicules de transport en commun. Le chauffeur connait ainsi en temps réel le positionnement de son véhicule (3) par rapport au quai (2) et à l'environnement.

Les capteurs de distance $D_{AVquai}$, $D_{ARquai}$, $D_{AVenv}$ et $D_{ARenv}$ sont préférentiellement prévus avec une portée de détection comprise entre 0 et 1,5 mètres.

Pour les deux variantes de l'invention, le dispositif d'assistance (1) selon l'invention comprend également un commutateur de mode accostage/routier (20) qui fait basculer le dispositif d'assistance (1) du mode routier en mode accostage et inversement lorsqu'il est actionné.

Ce commutateur de mode accostage/routier (20) est préférentiellement actionné manuellement au moyen d'un bouton (21) prévu dans le poste de conduite du véhicule (3), permettant ainsi au chauffeur de faire basculer lui-même le dispositif d'assistance (1) du mode routier en mode accostage et inversement.

Selon une variante de l'invention, ce commutateur de mode accostage/routier (20) peut également être actionné par un dialogue sans contact entre l'infrastructure (sol, quai, balise, etc.) et le véhicule (3).

Pour les raisons de sécurité déjà évoquées précédemment, ce commutateur de mode accostage/routier (20) ne permet pas de faire basculer le dispositif d'assistance (1) du mode routier en mode accostage tant que le véhicule roule à une vitesse qui correspond à celle d'un mode routier. En effet, le dispositif d'assistance (1) ne peut pas être basculé accidentellement du mode routier en mode accostage lorsque le véhicule circule à une vitesse où cela serait dangereux, et le dispositif d'assistance (1) bascule automatiquement en mode routier en cas de dépassement de cette vitesse.

Ainsi, le commutateur de mode accostage/routier (20) ne permet pas de basculer en mode accostage tant que le véhicule roule à une vitesse supérieure à la vitesse maximale pour l'accostage $V_{MAXaccostage}$.

En outre, lorsque la vitesse du véhicule (3) est supérieure à la vitesse maximale pour l'accostage $V_{MAXaccostage}$, le dispositif d'assistance (1) bascule 25 automatiquement en mode routier.

Cette vitesse maximale pour l'accostage $V_{MAXaccostage}$ est par défaut de 25 km/h, mais elle peut être affinée de manière empirique par des essais en situation réelle pour chaque type de véhicule, en fonction des spécificités de l'environnement dans lequel il est prévu qu'il circule.

Enfin, comme cela est représenté de manière schématique sur les figures 2 et 3, le dispositif d'assistance (1) selon l'invention comprend également une intelligence embarquée (22), laquelle est notamment connectée à tous les capteurs (12, 14, 15, 16, 17, 18) de l'invention, au dispositif de pilotage en direction (10) de l'essieu arrière (5) et au commutateur de mode accostage/routier (20).

Cette intelligence embarquée (22) comporte notamment une mémoire (non représentée) dans laquelle sont stockées les formules mathématiques utilisées par le dispositif d'assistance (1) selon l'invention, ainsi que les valeurs des constantes utilisées dans ces formules. Bien entendu, des moyens (non représentés) sont prévus pour pouvoir saisir et modifier ces formules mathématiques et ces constantes dans l'intelligence embarquée (22), que ce soit directement, ou à distance.

L'intelligence embarquée (22) peut comporter des moyens (non représentés) pour transmettre des informations au chauffeur, de préférence de manière visuelle.

De manière préférentielle, le dispositif d'assistance (1) selon l'invention comprend également un dispositif de surveillance (non représenté) de l'essieu arrière (5), prévu pour détecter toute anomalie au niveau de celui-ci, par exemple une défaillance de l'électronique, une défaillance de l'hydraulique, un défaut général de fonctionnement, une incohérence, etc. Dans le cas où une anomalie est détectée, l'essieu arrière (5) est mis en position de sécurité, fixant les roues arrière (9) dans leur position centrale, parallèles à l'axe longitudinal du véhicule.

On notera que la première variante de l'invention, qui ne comprend par exemple qu'un seul capteur de distance (16) au quai (2) situé à l'arrière du véhicule (3) est une version rudimentaire et simplifiée de l'invention, tandis que la seconde variante de l'invention, qui comprend de nombreux autres capteurs de distance (15, 17, 18), est une version plus élaborée et plus complexe de l'invention. La première variante de l'invention est par conséquent moins onéreuse que la seconde, mais elle fournit également une assistance moins optimisée pour le chauffeur lors de ses manoeuvres d'approche et de départ d'un quai (2).

Nous allons maintenant nous intéresser au fonctionnement du dispositif d'assistance (1) pour les manoeuvres d'accostage au niveau d'un quai (2) selon ces deux variantes de l'invention lors des différentes phases rencontrées lors d'un accostage.

Phase de roulage

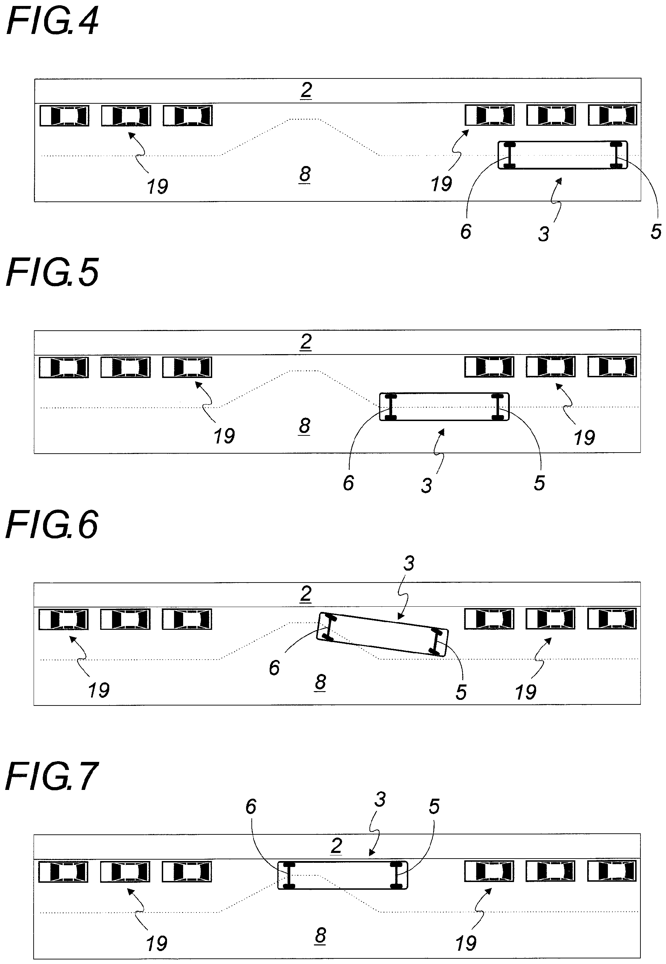

Lorsque le véhicule (3) circule à une vitesse normale, pour se déplacer rapidement d'un endroit à un autre, le dispositif d'assistance (1) selon l'invention est basculé en mode routier. Les roues arrière (9) sont droites, comme dans un véhicule classique (figure 4), ou asservies en position par rapport aux roues avant (11) si le chauffeur braque les roues avant (11) au-delà d'un certain angle de braquage $S_{AR-debloc}$.

Phase d'approche

Lors de la phase d'approche au cours de l'accostage à un quai (2), le chauffeur conduit son véhicule (3) à vitesse réduite et le dispositif d'assistance (1) selon l'invention est basculé en mode accostage.

Ainsi, la phase d'approche est initiée lorsque le véhicule roule à une vitesse inférieure à la vitesse maximale pour l'accostage $V_{MAXaccostage}$ et que le commutateur de mode accostage/routier (20) a été actionné manuellement par le chauffeur afin de basculer le dispositif d'assistance (1) du mode routier en mode accostage.

L'essieu arrière (5) est asservi de façon à ce qu'il s'approche au plus près du quai (2) tant que le détecteur de distance arrière (16) n'a pas détecté le quai (2) (figures 4 et 5). L'angle de braquage $A_{AR}$ des roues (9) de l'essieu arrière (5) est alors proportionnel à l'angle de braquage $A_{AV}$ des roues (11) de l'essieu avant (4) multiplié par un rapport angulaire $R_{AccostageSimpl}$, comme cela est donné dans la formule suivante :

$$A_{AR} = A_{AV} * R_{AccostageSimpl}$$

Le rapport angulaire $R_{AccostageSimpl}$ est préférentiellement compris entre 0 et 10. Sa valeur par défaut est égale à 2, mais elle peut être ajustée de manière empirique par des essais en situation réelle pour chaque type de véhicule.

Lorsque le détecteur de distance arrière (16) détecte le quai (2), l'essieu arrière (5) est piloté en mode accostage et les roues arrière (9) sont braquées de sorte que l'essieu arrière (5) arrive au plus près du quai (2) sans entrer en collision avec ce dernier (figure 6). Ce fonctionnement peut amener le véhicule (3) à se déplacer en crabe.

Le braquage des roues arrière (9) est adapté en fonction de la distance $D_{ARquai}$ de l'arrière du véhicule (3) par rapport au quai (2), pour que les roues (9, 11) du véhicule (3) n'entrent pas en collision avec le quai (2).

L'angle de braquage $A_{AR}$ des roues arrière (9) est ainsi calculé en fonction de la distance mesurée précédente, comme cela est donné dans la formule suivante :

$$A_{AR} = \min \left( A_{AV} * R_{AccostageSimpl} ; f \left( D_{ARquai} \right) \right)$$

$f(D_{ARquai})$ est une loi polynomiale de degré 2 de type :

$$\left( a_{quaiAR} * x^2 \right) + \left( b_{quaiAR} * x \right) + c_{quaiAR}$$

Les facteurs de la formule ci-dessus peuvent être ajustés de manière empirique par des essais en situation réelle pour chaque type de véhicule (3) en tenant compte des spécificités du type de lieu où il effectue ses manoeuvres d'accostage.

Par défaut, ces facteurs ont les valeurs suivantes :

$$a_{quaiAR} = -0.0305$$

$$b_{quaiAR} = 6.381$$

$$c_{quaiAR} = -44$$

Phase d'approche (pour la sus-mentionnée variante)

Lors de la phase d'approche au cours de l'accostage à un quai (2), le chauffeur conduit son véhicule (3) à vitesse réduite et le dispositif d'assistance (1) selon l'invention est basculé en mode accostage.

Les roues de l'essieu arrière (5) restent pilotées en mode routier tant que le détecteur de distance avant (15) n'a pas détecté le quai (2) (figure 5).

Lorsque le détecteur de distance avant (15) détecte le quai (2), l'essieu arrière (5) est piloté en mode accostage et les roues arrière (9) sont braquées de sorte que l'essieu arrière (5) arrive au plus près du quai (2) (figure 6).

Ce fonctionnement peut amener le véhicule (3) à se déplacer en crabe si l'environnement le permet, ou bien à se déplacer de manière plus conventionnelle en cas d'obstacle à éviter.

Le braquage des roues arrière (9) est adapté en fonction des mesures suivantes :

- la distance $D_{ARenv}$ de l'arrière du véhicule (3) par rapport aux autres obstacles de l'environnement, pour que le véhicule (3) n'entre pas en collision avec son environnement ;
- la distance $D_{ARquai}$ de l'arrière du véhicule (3) par rapport au quai (2), pour que les roues (9, 11) du véhicule (3) n'entrent pas en collision avec le quai (2) ;
- la distance $D_{AVquai}$ de l'avant du véhicule (3) par rapport au quai (2), pour que l'arrière du véhicule (3) ne s'approche pas du quai (2) plus rapidement que l'avant du véhicule (3).

L'angle de braquage $A_{AR}$ des roues arrière (9) est ainsi calculé en fonction des trois distances mesurées précédentes, comme cela est donné dans les trois formules suivantes :

$$A_{AR} = \min \left( f(D_{ARenv}) ; f(D_{ARquai}) ; f(D_{AVquai}) \right)$$

$f(D_{ARenv})$ est une loi polynomiale de degré 2 de type :

$$(a_{env} * x^2) + (b_{env} * x) + c_{env}$$

$f(D_{ARquai})$ est une loi polynomiale de degré 2 de type :

$$(a_{quaiAR} * x^2) + (b_{quaiAR} * x) + c_{quaiAR}$$

$f(D_{AVquai})$ est une loi polynomiale de degré 1 de type :

$$a_{quaiAV} * (D_{AVquai} - D_{ARquai}) + b_{quaiAV}$$

Les différents facteurs des trois formules ci-dessus sont interdépendants les uns des autres et sont liés intrinsèquement au type de véhicule (3) équipé du dispositif d'assistance (1) selon l'invention.

Ces facteurs peuvent être ajustés de manière empirique par des essais en situation réelle pour chaque type de véhicule (3) en tenant compte des spécificités du type de lieu où il effectue ses manoeuvres d'accostage.

Par défaut, ces facteurs ont les valeurs suivantes :

$$a_{env} = 0$$

$$b_{env} = 4.4$$

$$c_{env} = -50$$

$$a_{quaiAR} = -0.0305$$

$$b_{quaiAR} = 6.381$$

$$c_{quaiAR} = -44$$

$$a_{quaiAV} = 0.5$$

$$b_{quaiAV} = 0$$

Phase d'arrêt

Lorsque le véhicule (3) est accosté à quai (2), il marque un arrêt sur place. Il entre provisoirement en phase d'arrêt.

Lorsqu'il s'agit d'un véhicule de transport en commun, le chauffeur autorise alors l'ouverture des portes.

Lors de la phase d'arrêt, les roues arrière (9) sont préférentiellement pilotées de manière à être droites de sorte de pouvoir être situées au plus près du quai (2), mais cela peut accroître l'usure des pneus, aussi cette orientation droite des roues arrière (9) peut être optionnelle.

Le véhicule (3) est situé au plus près du quai (2), à la fois à l'avant et à l'arrière, de manière à faciliter la montée et la descente des passagers (figure 7).

Phase de départ

Une fois la montée et la descente des passagers terminée, le véhicule (3) peut quitter le quai (2).

Lorsqu'il s'agit d'un véhicule de transport en commun, le chauffeur condamne alors l'ouverture des portes, ce qui initie la phase de départ. Pour des raisons évidentes de sécurité, cette phase ne peut être effective qu'une fois les portes fermées et verrouillées.

Ainsi, l'essieu arrière (5) reste verrouillé avec les roues arrière (9) préférentiellement en position droite tant que les portes ne sont pas verrouillées.

Une fois que les portes sont verrouillées, la traction est de nouveau disponible pour le chauffeur qui peut quitter le quai (2).

Le dispositif d'assistance (1) selon l'invention est alors basculé en mode accostage.

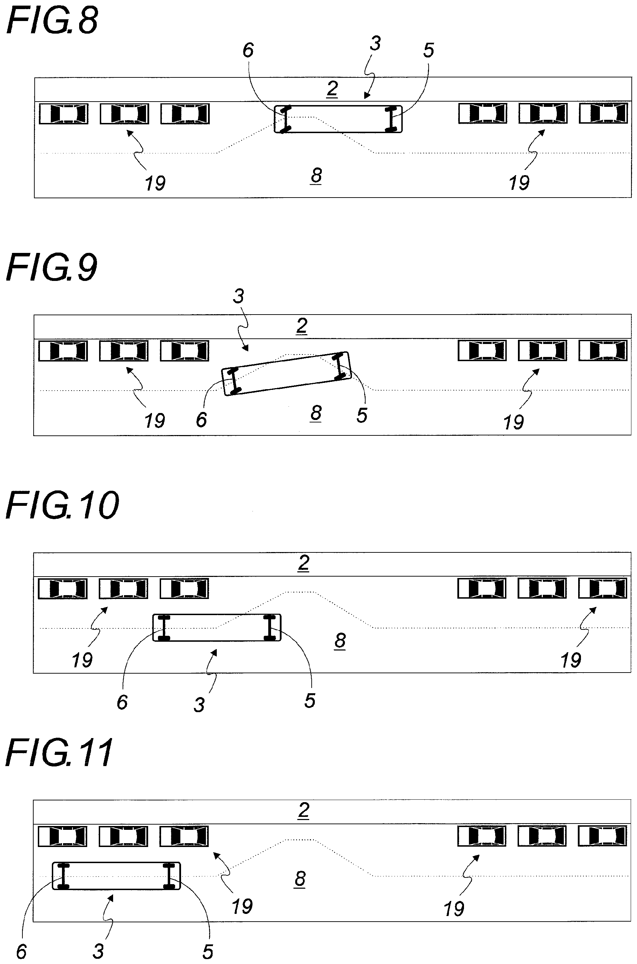

Lors de cette phase de départ, le dispositif d'assistance (1) de l'invention interdit à l'essieu arrière (5) de braquer les roues arrière (9) en direction du quai (2). Les roues arrière (9) sont en effet braquées dans le sens opposé (figure 8) de manière proportionnelle à la commande de braquage reçue par les roues (11) de l'essieu avant (4) selon la formule suivante :

$$A_{AR} = A_{AV} * k_{départ}$$

dans laquelle $k_{départ}$ est un pourcentage de proportionnalité exprimé en pourcentage.

Par défaut, $k_{départ}$ est choisi avec une valeur égale à 20%. Comme précédemment, cette valeur peut être affinée de manière empirique.

Selon une variante de l'invention, lors de la phase de départ, les roues arrière (9) ne sont pas braquées de manière proportionnelle à la commande de braquage reçue par les roues (11) de l'essieu avant (4), mais braquées selon un angle de braquage fixe, par exemple égal à 5° vers la gauche.

Selon une autre variante de l'invention, les roues arrière (9) sont braquées de la même manière que lors de la phase d'approche mais de manière inverse. Ainsi, l'essieu arrière (5) quitte le quai (2) le plus rapidement possible sans jamais entrer en collision avec son environnement et sans s'éloigner du quai (2) plus rapidement que l'essieu avant (6).

Phase de roulage

Lorsque le véhicule (3) a terminé de quitter le quai (2) (figure 9), la phase de départ est terminée et le dispositif d'assistance (1) selon l'invention est basculé en mode routier (figure 10). Le véhicule (3) est alors à nouveau en phase de roulage (figure 11).

Une fois que le véhicule (3) a terminé sa phase de départ, le basculement du dispositif d'assistance (1) de l'invention en mode routier peut se faire manuellement par le chauffeur au moyen du commutateur de mode accostage/routier (20), automatiquement lorsque la vitesse du véhicule (3) est supérieure à la vitesse maximale pour l'accostage $V_{MAXaccostage}$ (par défaut égale à 10 km/h) ou automatiquement lorsque l'angle de braquage $A_{AV}$ à droite des roues avant (11) est supérieur à un angle $\alpha_{SortieAccostage}$ de braquage de sortie d'accostage.

L'angle $\alpha_{SortieAccostage}$ de braquage de sortie d'accostage peut être exprimé en angle absolu ou en pourcentage par rapport à l'angle $A_{AV-max}$ de braquage maximal des roues avant (11). Cet angle $\alpha_{SortieAccostage}$ est préférentiellement égal à 5° vers la droite, cette valeur pouvant être affinée de manière empirique.

Marche arrière

Le dispositif d'assistance (1) pour les manoeuvres d'accostage au niveau d'un quai (2) selon la première variante de l'invention est également prévu pour pouvoir être utilisé lors d'une marche arrière du véhicule (3) qui en est équipé, pour l'ensemble des mode de pilotage de l'essieu arrière (5).

En phase de roulage, le dispositif d'assistance (1) est en mode routier et aucune modification de la loi de pilotage n'est nécessaire.

En phase d'approche, tant que le détecteur de distance arrière (16) ne détecte pas le quai (2), la loi de pilotage n'est pas modifiée. Lorsque le détecteur de distance arrière (16) détecte le quai (2), alors la loi de pilotage est inversée, c'est-à-dire que les roues arrière (9) sont pilotées de façon à s'approcher du quai, sans jamais entrer en collision avec ce dernier.

En phase d'arrêt et en phase de départ, la loi de pilotage est inversée comme précédemment.

Marche arrière (pour la sus-mentionnée variante)

Le dispositif d'assistance (1) pour les manoeuvres d'accostage au niveau d'un quai (2) selon la seconde variante de l'invention est également prévu lors d'une marche arrière du véhicule (3) qui en est équipé, pour l'ensemble des mode de pilotage de l'essieu arrière (5).

En phase de roulage, le dispositif d'assistance (1) est en mode routier et aucune modification de la loi de pilotage n'est nécessaire.

En phase d'approche, tant que le détecteur de distance avant (15) ne détecte pas le quai (2), la loi de pilotage n'est pas modifiée. Lorsque le détecteur de distance avant (15) détecte le quai (2), alors la loi de pilotage est inversée, c'est-à-dire que les roues arrière (9) sont pilotées de façon à s'approcher du quai, sans jamais entrer en collision avec ce dernier.

En phase d'arrêt et en phase de départ, la loi de pilotage est inversée comme précédemment.

Il est évident que la présente description ne se limite pas aux exemples explicitement décrits, mais comprend également d'autres modes de réalisation et/ou de mise en oeuvre.

**Revendications**

**1.** Véhicule routier (3) comportant des roues avant (11) montées sur un essieu avant directeur (4) et des roues arrière (9) montées sur un essieu arrière (5), **caractérisé en ce qu'**il comporte un dispositif d'assistance (1) pour les manoeuvres d'accostage au niveau d'un quai (2) et **en ce que** l'essieu arrière (5) est directeur et équipé d'une direction (7), le dispositif d'assistance (1) étant prévu pour fonctionner selon un mode routier ou selon un mode accostage et comprenant les moyens suivants :

- un dispositif de pilotage en direction (10) prévu pour commander l'angle de braquage $A_{AR}$ des roues arrière (9) ;
- un capteur de distance (16) prévu à l'arrière du véhicule (3) pour mesurer la distance $D_{ARquai}$ de l'arrière du véhicule (3) par rapport au quai (2) ;

dans lequel :

- en mode routier, soit les roues arrière (9) sont droites, soit leur angle de braquage $A_{AR}$ est commandé par le dispositif de pilotage en direction (10) en fonction de l'angle de braquage $A_{AV}$ des roues avant (11) ;
- en mode accostage, l'angle de braquage des roues arrière (9) est commandé par le dispositif de pilotage en direction (10) en fonction des distances mesurées par le capteur de distance (16) et en fonction de l'angle de braquage $A_{AV}$ des roues avant (11).

**2.** Véhicule routier (3) selon la revendication 1, **caractérisé en ce que** le dispositif d'assistance comprend en outre les moyens suivants :

- un capteur de distance (15) prévu à l'avant pour mesurer la distance $D_{AVquia}$ de l'avant du véhicule (3) par rapport au quai (2) ;
- un capteur de distance (18) prévu à l'arrière du véhicule (3) pour mesurer la distance $D_{ARenv}$ de l'arrière du véhicule (3) par rapport aux autres obstacles de l'environnement ;

dans lequel :

- en mode routier, soit les roues arrière (9) sont droites, soit leur angle de braquage $A_{AR}$ est commandé par le dispositif de pilotage en direction (10) en fonction de l'angle de braquage $A_{AV}$ des roues avant (11) ;
- en mode accostage, l'angle de braquage des roues arrière (9) est commandé par le dispositif de pilotage en direction (10) en fonction des distances mesurées par les capteurs de distance (15, 16, 18).

**3.** Véhicule routier (3) selon l'une quelconque des revendications précédentes, **caractérisé en ce que** le dispositif d'assistance comprend en outre un capteur de distance (17) prévu à l'avant du véhicule (3) pour mesurer la distance $D_{AVenv}$ de l'avant du véhicule (3) par rapport aux autres obstacles de l'environnement.

**4.** Véhicule routier (3) selon l'une quelconque des revendications précédentes, **caractérisé en ce que** les roues arrière (9) peuvent être braquées selon un angle dont la valeur absolue est supérieure à 10°, préférentiellement supérieure à 20° et plus préférentiellement supérieure à 30°.

**5.** Véhicule routier (3) selon l'une quelconque des revendications précédentes, **caractérisé en ce qu'**en mode routier, le dispositif de pilotage en direction (10) commande l'angle de braquage $A_{AR}$ des roues arrière (9) de sorte que les roues arrière (9) sont d'abord droites puis, au-delà d'un certain angle de braquage des roues avant (11), les roues arrière (9) sont asservies en braquage de manière proportionnelle et linéaire par rapport à la commande de braquage reçue par les roues avant (11).

6. Véhicule routier (3) selon l'une quelconque des revendications précédentes, **caractérisé en ce qu'**en mode routier l'essieu arrière (5) est fixe avec les roues arrière (9) droites lorsque la vitesse du véhicule (3) est supérieure à la vitesse maximale du mode routier $S_{VAR}$.

7. Véhicule routier (3) selon l'une quelconque des revendications précédentes, **caractérisé en ce que** le dispositif d'assistance (1) bascule automatiquement du mode accostage en mode routier lorsque la vitesse du véhicule est supérieure à une vitesse maximale pour l'accostage $V_{MAXaccostage}$ ou lorsque l'angle de braquage $A_{AV}$ des roues avant (11) est supérieur à un angle $\alpha_{SortieAccostage}$ de braquage de sortie d'accostage.

8. Véhicule routier (3) selon l'une quelconque des revendications précédentes, **caractérisé en ce que** le dispositif d'assistance (1) comprend des capteurs permettant de mesurer l'angle de braquage $A_{AV}$ des roues avant (11) et l'angle de braquage $A_{AR}$ des roues arrière (9).

9. Véhicule routier (3) selon la revendication 8, **caractérisé en ce que** l'essieu avant (4) comporte un boitier de direction (13) et **en ce que** l'angle de braquage $A_{AV}$ des roues avant (11) est mesuré par un capteur d'angle (12) qui est relié à ce boitier de direction (13).

10. Véhicule routier (3) selon la revendication 8 **caractérisé en ce que** le dispositif de pilotage en direction (10) comprend un actionneur à tige mobile et **en ce que** l'angle de braquage $A_{AR}$ des roues arrière (9) est mesuré par un capteur de position (14) relié à l'actionneur du dispositif de pilotage en direction (10), l'angle de braquage $A_{AR}$ des roues arrière (9) étant calculé en fonction de la position de la tige de l'actionneur.

11. Véhicule routier (3) selon la revendication 1, 2 ou 3, **caractérisé en ce que** les capteurs de distance (15, 16, 17, 18) sont prévus sur le côté droit du véhicule (3).

12. Véhicule routier (3) selon la revendication 1, 2 ou 3, **caractérisé en ce que** les capteurs de distance (15, 17) prévus à l'avant du véhicule (3) sont prévus devant les roues avant (11), **en ce que** le capteur de distance au quai (16) prévu à l'arrière du véhicule (3) est prévu devant les roues arrière (9), et **en ce que** le capteur d'environnement arrière (18) est prévu à l'arrière des roues arrière (9).

13. Véhicule routier (3) selon la revendication 1, 2 ou 3, **caractérisé en ce que** les informations de distance à l'avant et à l'arrière qui sont reçues par les capteurs de distance (15, 16, 17, 18) sont transmises au chauffeur de manière visuelle.

14. Véhicule routier (3) selon l'une quelconque des revendications précédentes, **caractérisé en ce que** le dispositif d'assistance (1) comprend un commutateur de mode accostage/routier (20) qui fait basculer le dispositif d'assistance (1) du mode routier en mode accostage et inversement lorsqu'il est actionné.

15. Véhicule routier (3) selon la revendication précédente, **caractérisé en ce que** le commutateur de mode accostage/routier (20) est actionné manuellement par le chauffeur au moyen d'un bouton (21) prévu dans le poste de conduite du véhicule (3) ou **en ce qu'**il est actionné par un dialogue sans contact entre l'infrastructure et le véhicule (3).

16. Véhicule routier (3) selon la revendication 14, **caractérisé en ce que** le commutateur de mode accostage/routier (20) ne permet pas de faire basculer le dispositif d'assistance (1) du mode routier en mode accostage tant que le véhicule (3) roule à une vitesse supérieure à la vitesse maximale pour l'accostage $V_{MAXaccostage}$.

17. Véhicule routier (3) selon l'une quelconque des revendications précédentes, **caractérisé en ce que** le dispositif d'assistance (1) comprend également une intelligence embarquée (22) qui pilote le dispositif de pilotage en direction (10) de l'essieu arrière (5).

18. Véhicule routier (3) selon les revendications 8, 14 et 17, **caractérisé en ce que** l'intelligence embarquée (22) est connectée aux capteurs de distance (15, 16, 18), aux capteurs permettant de mesurer l'angle de braquage $A_{AV}$ des roues avant (11) et l'angle de braquage $A_{AR}$ des roues arrière (9), et au commutateur de mode accostage/routier (20).

19. Véhicule routier (3) selon la revendication 18, **caractérisé en ce que** l'intelligence embarquée (22) comporte une mémoire dans laquelle sont stockées les formules mathématiques utilisées par le dispositif d'assistance (1) pour commander l'angle de braquage des roues arrière (9) en mode routier et en mode accostage, ainsi que les valeurs des constantes utilisées dans ces formules.

20. Procédé d'accostage à un quai pour un véhicule routier (3) selon l'une quelconque des revendications précédentes, **caractérisé en ce qu'**il comprend les étapes successives suivantes :

a) une phase de roulage, lorsque le véhicule (3) circule de manière classique, dans laquelle le dispositif d'assistance (1) est basculé en mode routier et dans laquelle les roues arrière (9) sont droites ou asservies à la direction avant ;

b) une phase d'approche, lorsque le véhicule (3) débute son accostage à un quai (2), dans laquelle le dispositif d'assistance (1) est basculé en mode accostage, dans laquelle les roues arrière (9) restent en mode routier tant que le détecteur de distance avant (15) n'a pas détecté le quai (2), et dans laquelle, lorsque le détecteur de distance avant (15) détecte le quai (2), les roues arrière (9) sont pilotées par le dispositif d'assistance (1) et braquées de sorte que l'essieu arrière (5) soit déplacé en direction du quai (2) ;

c) une phase d'arrêt, lorsque le véhicule (3) est accosté à quai (2) ;

d) une phase de départ, lorsque le véhicule (3) quitte le quai (2), dans laquelle le dispositif d'assistance (1) est basculé en mode accostage et dans laquelle les roues arrière (9) sont braquées de sorte que l'essieu arrière (5) soit déplacé en éloignement du quai (2) ;

e) une phase de roulage, lorsque le véhicule (3) circule de manière classique après avoir terminé de quitter le quai (2), dans laquelle le dispositif d'assistance (1) est basculé en mode routier et dans laquelle les roues arrière (9) sont droites ou asservies à la direction avant.

21. Procédé d'accostage selon la revendication précédente, **caractérisé en ce qu'**au cours de la phase d'arrêt, les roues arrière (9) sont pilotées de manière à être ramenées en position non braquées.

**Patentansprüche**

1. Straßenfahrzeug (3) mit Vorderrädern (11), die an einer vorderen Lenkachse (4) montiert sind, und mit Hinterrädern (9), die an einer Hinterachse (5) montiert sind, **dadurch gekennzeichnet, dass** es ein Hilfsmittel (1) für Anlegemanöver im Bereich eines Anhalteplatzes (2) aufweist, und dass die Hinterachse (5) lenkend und mit einer Lenkung (7) ausgestattet ist, wobei das Hilfsmittel (1) für den Betrieb in einem Straßenmodus oder in einem Anlegemodus vorgesehen ist und die folgenden Mittel aufweist:

- eine Lenkführungseinrichtung (10), um den Lenkwinkel $A_{AR}$ der Hinterräder (9) zu steuern;
- einen Abstandssensor (16), der auf der Rückseite des Fahrzeugs (3) vorgesehen ist, um den Abstand $D_{ARquai}$ der Rückseite des Fahrzeugs (3) in Bezug auf den Anhalteplatz (2) zu erfassen;

wobei:

- im Straßenmodus die Hinterräder (9) entweder gerade ausgerichtet sind oder ihr Lenkwinkel $A_{AR}$ von der Lenkführungseinrichtung (10) in Abhängigkeit von dem Lenkwinkel $A_{AV}$ der Vorderräder (11) gesteuert ist;
- im Anlegemodus der Lenkwinkel der Hinterräder (9) von der Lenkführungseinrichtung (10) in Abhängigkeit von den Abständen, die von dem Abstandssensor (16) erfasst werden, und in Abhängigkeit von dem Lenkwinkel $A_{AV}$ der Vorderräder (11) gesteuert ist.

2. Straßenfahrzeug (3) nach Anspruch 1, **dadurch gekennzeichnet, dass** das Hilfsmittel ferner die folgenden Mittel aufweist:

- einen Abstandssensor (15), der an der Vorderseite angeordnet ist, um den Abstand $D_{AVquai}$ der Vorderseite des Fahrzeugs (3) in Bezug auf den Anhalteplatz (2) zu erfassen;
- einen Abstandssensor (18), der an der Rückseite des Fahrzeugs (3) angeordnet ist, um den Abstand $D_{ARenv}$ der Rückseite des Fahrzeugs (3) in Bezug auf andere Hindernisse der Umgebung zu erfassen;

wobei:

- im Straßenmodus die Hinterräder (9) entweder gerade ausgerichtet sind oder ihr Lenkwinkel $A_{AR}$ von der Lenkführungseinrichtung (10) in Abhängigkeit von dem Lenkwinkel $A_{AV}$ der Vorderräder (11) gesteuert ist;

- im Anlegemodus der Lenkwinkel der Hinterräder (9) von der Lenkführungseinrichtung (10) in Abhängigkeit von den Abständen, die von den Abstandssensoren (15, 16, 18) erfasst werden, gesteuert ist.

3. Straßenfahrzeug (3) nach einem der vorangehenden Ansprüche, **dadurch gekennzeichnet, dass** das Hilfsmittel ferner einen Abstandssensor (17) umfasst, der an der Vorderseite des Fahrzeugs (3) angeordnet ist, um den Abstand $D_{AVenv}$ der Vorderseite des Fahrzeugs (3) in Bezug auf andere Hindernissen der Umgebung zu erfassen.

4. Straßenfahrzeug (3) nach einem der vorangehenden Ansprüche, **dadurch gekennzeichnet, dass** die Hinterräder (9) um einen Winkel ausgelenkt werden können, dessen absoluter Wert größer ist als 10°, vorzugsweise größer als 20°, und höchst vorzugsweise größer als 30°.

5. Straßenfahrzeug (3) nach einem der vorangehenden Ansprüche, **dadurch gekennzeichnet, dass** im Straßenmodus die Lenkführungseinrichtung (10) den Lenkwinkel $A_{AR}$ der Hinterräder (9) derart steuert, dass die Hinterräder (9) zunächst gerade ausgerichtet sind, und dass ab einem bestimmten Lenkwinkel der Vorderräder (11) die Hinterräder (9) proportional und linear zur Auslenkung der Vorderräder (11) ausgelenkt werden.

6. Straßenfahrzeug (3) nach einem der vorangehenden Ansprüche, **dadurch gekennzeichnet, dass** im Straßenmodus die Hinterachse (5) mit den gerade ausgerichteten Hinterrädern fixiert ist, wenn die Geschwindigkeit des Fahrzeugs (3) größer ist als die Maximalgeschwindigkeit des Straßenmodus $S_{VAR}$.

7. Straßenfahrzeug (3) nach einem der vorangehenden Ansprüche, **dadurch gekennzeichnet, dass** das Hilfsmittel (1) automatisch von dem Anlegemodus in den Straßenmodus umschaltet, wenn die Geschwindigkeit des Fahrzeugs größer ist als eine Maximalgeschwindigkeit für das Anlegen $V_{MAXaccostage}$ oder wenn der Lenkwinkel $A_{AV}$ der Vorderräder (1) größer ist als ein Lenkwinkel $\alpha_{SortieAccostage}$ für die Ausfahrt aus dem Anhalteplatz.

8. Straßenfahrzeug (3) nach einem der vorangehenden Ansprüche, **dadurch gekennzeichnet, dass** das Hilfsmittel (1) Sensoren aufweist, welche die Messung des Lenkwinkels $A_{AV}$ der Vorderräder (11) und des Lenkwinkels $A_{AR}$ der Hinterräder (9) ermöglichen.

9. Straßenfahrzeug (3) nach Anspruch 8, **dadurch gekennzeichnet, dass** die Vorderachse (4) ein Lenkgetriebe (13) aufweist, und dass der Lenkwinkel $A_{AV}$ der Vorderräder (11) mittels eines Winkelsensors (12) gemessen wird, der mit dem Lenkgetriebe (13) verbunden ist.

10. Straßenfahrzeug (3) nach Anspruch 8, **dadurch gekennzeichnet, dass** die Lenkführungseinrichtung (10) einen beweglichen Stangenantrieb aufweist, und dass der Lenkwinkel $A_{AR}$ der Hinterräder (9) mittels eines Positionssensors (14) gemessen wird, der mit dem Antrieb der Lenkführungseinrichtung (10) verbunden ist, wobei der Lenkwinkel $A_{AR}$ der Hinterräder (9) in Abhängigkeit von der Position der Stange des Stangenantriebs berechnet wird.

11. Straßenfahrzeug (3) nach einem der Ansprüche 1, 2 oder 3, **dadurch gekennzeichnet, dass** die Abstandssensoren (15, 16, 17, 18) auf der rechten Seite des Fahrzeugs (3) angeordnet sind.

12. Straßenfahrzeug (3) nach einem der Ansprüche 1, 2, oder 3, **dadurch gekennzeichnet, dass** die Abstandssensoren (15, 17) an der Vorderseite des Fahrzeugs (3) vor den Vorderrädern (11) angeordnet sind, dass der Abstandssensor (16) für den Anhalteplatz an der Rückseite des Fahrzeugs (3) vor den Hinterrädern (9) angeordnet ist, und dass der hintere Umgebungssensor (18) hinter den Hinterrädern (9) angeordnet ist.

13. Straßenfahrzeug (3) nach einem der Ansprüche 1, 2 oder 3, **dadurch gekennzeichnet, dass** die Informationen über den Abstand nach vorne und nach hinten, die von den Abstandssensoren (15, 16, 17, 18) empfangen werden, visuell an den Fahrer übermittelt werden.

14. Straßenfahrzeug (3) nach einem der vorangehenden Ansprüche, **dadurch gekennzeichnet, dass** das Hilfsmittel (1) einen Schalter (20) für den Anlegemodus/Straßenmodus aufweist, der das Hilfsmittel (1) vom Straßenmodus in den Anlegemodus und umgekehrt umschaltet, wenn er betätigt wird.

15. Straßenfahrzeug (3) nach dem vorangehenden Anspruch, **dadurch gekennzeichnet, dass** der Schalter (20) für den Anlegemodus/Straßenmodus manuell vom Fahrer mittels einer Taste (21) betätigbar ist, die im Cockpit des Fahrzeugs (3) angeordnet ist, oder dass er durch einen berührungslosen Dialog zwischen der Infrastruktur des Fahrzeugs (3) betätigbar ist.

**16.** Straßenfahrzeug (3) nach Anspruch 14, **dadurch gekennzeichnet, dass** der Schalter (20) für den Anlegemodus/Straßenmodus keine Umschaltung des Hilfsmittels (1) vom Straßenmodus in den Anlegemodus erlaubt, solange das Fahrzeug (3) mit einer Geschwindigkeit fährt, die größer ist als die Maximalgeschwindigkeit für das Anlegen $V_{MAxaccostage}$.

**17.** Straßenfahrzeug (3) nach einem der vorangehenden Ansprüche, **dadurch gekennzeichnet, dass** das Hilfsmittel (1) auch eine eingebettete Intelligenz (22) aufweist, welche die Lenkführungseinrichtung (10) der Hinterachse (5) steuert.

**18.** Straßenfahrzeug (3) nach den Ansprüchen 8, 14 und 17, **dadurch gekennzeichnet, dass** die eingebettete Intelligenz (2) mit den Abstandssensoren (15, 16, 18), mit den Sensoren zur Erfassung des Lenkwinkels $A_{AV}$ der Vorderräder (11) und des Lenkwinkels $A_{AR}$ der Hinterräder (9) und mit dem Schalter für den Anlegemodus/Straßenmodus (20) verbunden ist.

**19.** Straßenfahrzeug (3) nach Anspruch 18, **dadurch gekennzeichnet, dass** die eingebettete Intelligenz (22) einen Speicher aufweist, in dem mathematische Formeln gespeichert sind, die von dem Hilfsmittel (1) benutzt werden, um den Lenkwinkel der Hinterräder (9) im Straßenmodus und im Anlegemodus zu steuern, sowie die Werte der Konstanten, die in diesen Formeln verwendet werden.

**20.** Verfahren zum Anlegen an einem Anhalteplatz mittels eines Straßenfahrzeugs (3) nach einem der vorangehenden Ansprüche, **dadurch gekennzeichnet, dass** es die folgenden, aufeinanderfolgenden Schritte aufweist:

a) eine Fahrphase, wenn das Fahrzeug (3) in klassischer Weise verkehrt, in der das Hilfsmittel (1) in den Straßenmodus umgeschaltet ist und in der die Hinterräder (9) gerade oder nach vorne ausgerichtet sind;
b) eine Annäherungsphase, wenn das Fahrzeug (3) den Anlegevorgang an dem Anhalteplatz (2) beginnt, in der das Hilfsmittel (1) in den Anlegemodus umgeschaltet ist, in der die Hinterräder (9) im Straßenmodus verbleiben, so lange der vordere Abstandssensor (15) den Anhalteplatz (2) nicht erkannt hat, und in der, wenn der vordere Abstandssensor (15) den Anhalteplatz (2) erkannt hat, die Hinterräder (9) durch das Hilfsmittel (1) gesteuert und derart ausgelenkt werden, dass die Hinterachse (5) in die Richtung des Anhalteplatzes (2) bewegt wird;
c) eine Haltephase, wenn das Fahrzeug (3) an dem Anhalteplatz (2) angelegt ist;
d) eine Abfahrtsphase, wenn das Fahrzeug (3) den Anhalteplatz (2) verlässt, in der das Hilfsmittel (2) in Anlegemodus umgeschaltet ist und in dem die Hinterräder (9) derart ausgelenkt werden, dass die Hinterachse (5) von dem Anhalteplatz (2) fort bewegt wird;
e) eine Fahrphase, wenn das Fahrzeug (3) nach dem Verlassen des Anhalteplatzes (2) in klassischer Weise verkehrt, in der das Hilfsmittel (1) in den Straßenmodus umgeschaltet ist und in der die Hinterräder (9) gerade oder nach vorne ausgerichtet sind.

**21.** Verfahren zum Anlegen nach dem vorhergehenden Anspruch, **dadurch gekennzeichnet, dass** während der Haltephase die Hinterräder (9) derart angesteuert werden, dass sie in die nicht ausgelenkte Position zurückkehren.

**Claims**

**1.** Road vehicle (3) comprising front wheels (11) which are mounted on a front steering axle (4) and rear wheels (9) which are mounted on a rear axle (5), **characterised in that** it comprises an assistance device (1) for parking manoeuvres in the region of a platform (2) and **in that** the rear axle (5) is a steering axle and is provided with a steering system (7), the assistance device (1) being provided in order to function in accordance with a road mode or in accordance with a parking mode and comprising the following means:

- a steering control device (10) provided to control the steering angle $A_{AR}$ of the rear wheels (9);
- a distance sensor (16) which is provided at the rear of the vehicle (3) in order to measure the distance $D_{ARquai}$ of the rear of the vehicle (3) relative to the platform (2);

wherein:

- in road mode, either the rear wheels (9) are straight, or their steering angle $A_{AR}$ is controlled by the steering control device (10) in accordance with the steering angle $A_{AV}$ of the front wheels (11);

- in parking mode, the steering angle of the rear wheels (9) is controlled by the steering control device (10) in accordance with the distances measured by the distance sensor (16) and in accordance with the steering angle $A_{AV}$ of the front wheels (11).

2. Road vehicle (3) according to claim 1, **characterised in that** the assistance device further comprises the following means:

   - a distance sensor (15) which is provided at the front in order to measure the distance $D_{AVquai}$ of the front of the vehicle (3) relative to the platform (2);
   - a distance sensor (18) provided at the rear of the vehicle (3) in order to measure the distance $D_{ARenv}$ of the rear of the vehicle (3) relative to the other obstacles of the environment;

   wherein:

   - in road mode, either the rear wheels (9) are straight, or their steering angle $A_{AR}$ is controlled by the steering control device (10) in accordance with the steering angle $A_{AV}$ of the front wheels (11);
   - in parking mode, the steering angle of the rear wheels (9) is controlled by the steering control device (10) in accordance with the distances measured by the distance sensors (15, 16, 18).

3. Road vehicle (3) according to either of the preceding claims, **characterised in that** the assistance device further comprises a distance sensor (17) which is provided at the front of the vehicle (3) in order to measure the distance $D_{AVenv}$ of the front of the vehicle (3) relative to the other obstacles of the environment.

4. Road vehicle (3) according to any one of the preceding claims, **characterised in that** the rear wheels (9) may be steered according to an angle whose absolute value is greater than 10°, preferably greater than 20° and more preferably greater than 30°.

5. Road vehicle (3) according to any one of the preceding claims, **characterised in that** in road mode, the steering control device (10) controls the steering angle $A_{AR}$ of the rear wheels (9) so that the rear wheels (9) are first straight, then, beyond a specific steering angle of the front wheels (11), the rear wheels (9) are assisted in terms of steering in a proportional and linear manner relative to the steering instruction received by the front wheels (11).

6. Road vehicle (3) according to any one of the preceding claims, **characterised in that** in road mode, the rear axle (5) is fixed with the rear wheels (9) straight when the speed of the vehicle (3) is greater than the maximum speed of the road mode $S_{VAR}$.

7. Road vehicle (3) according to any one of the preceding claims, **characterised in that** the assistance device (1) moves automatically from parking mode into road mode when the speed of the vehicle is greater than a maximum speed for the parking $V_{MAXaccostage}$ or when the steering angle $A_{AV}$ of the front wheels (11) is greater than a steering angle $\alpha_{SortieAccostage}$ for leaving parking.

8. Road vehicle (3) according to any one of the preceding claims, **characterised in that** the assistance device (1) comprises sensors which enable the steering angle $A_{AV}$ of the front wheels (11) and the steering angle $A_{AR}$ of the rear wheels (9) to be measured.

9. Road vehicle (3) according to claim 8, **characterised in that** the front axle (4) comprises a steering box (13) and **in that** the steering angle $A_{AV}$ of the front wheels (11) is measured by an angle sensor (12) which is connected to this steering box (13).

10. Road vehicle (3) according to claim 8, **characterised in that** the steering control device (10) comprises an actuator with a movable rod and **in that** the steering angle $A_{AR}$ of the rear wheels (9) is measured by a position sensor (14) which is connected to the actuator of the steering control device (10), the steering angle $A_{AR}$ of the rear wheels (9) being calculated in accordance with the position of the rod of the actuator.

11. Road vehicle (3) according to claim 1, 2 or 3, **characterised in that** the distance sensors (15, 16, 17, 18) are provided on the right side of the vehicle (3).

12. Road vehicle (3) according to claim 1, 2 or 3, **characterised in that** the distance sensors (15, 17) provided at the front of the vehicle (3) are provided in front of the rear wheels (11), **in that** the distance sensor relative to the platform (16) provided at the rear of the vehicle (3) is provided in front of the rear wheels (9) and **in that** the rear environment sensor (18) is provided at the rear of the rear wheels (9).

13. Road vehicle (3) according to claim 1, 2 or 3, **characterised in that** the distance information items at the front and at the rear which are received by the distance sensors (15, 16, 17, 18) are transmitted to the driver in a visual manner.

14. Road vehicle (3) according to any one of the preceding claims, **characterised in that** the assistance device (1) comprises a parking/road mode commutator (20) which moves the assistance device (1) from road mode into parking mode and vice versa when it is actuated.

15. Road vehicle (3) according to the preceding claim, **characterised in that** the parking/road mode commutator (20) is actuated manually by the driver using a button (21) provided in the driver's cab of the vehicle (3) or **in that** it is actuated by a contactless dialogue between the infrastructure and the vehicle (3).

16. Road vehicle (3) according to claim 14, **characterised in that** the parking/road mode commutator (20) does not enable the assistance device (1) to be moved from road mode into parking mode whilst the vehicle (3) is travelling at a speed greater than the maximum speed for the parking $V_{MAXaccostage}$.

17. Road vehicle (3) according to any one of the preceding claims, **characterised in that** the assistance device (1) also comprises on-board intelligence which controls the steering control device (10) of the rear axle (5).

18. Road vehicle (3) according to claims 8, 14 and 17, **characterised in that** the on-board intelligence (22) is connected to the distance sensors (15, 16, 18), to the sensors which enable the steering angle $A_{AV}$ of the front wheels (11) and the steering angle $A_{AR}$ of the rear wheels (9) to be measured and to the parking/road mode commutator (20).

19. Road vehicle (3) according to claim 18, **characterised in that** the on-board intelligence (22) comprises a memory in which the mathematical formulae used by the assistance device (1) in order to control the steering angle of the rear wheels (9) in road mode and in parking mode, and the values of the constants used in these formulae are stored.

20. Method for parking at a platform for a road vehicle (3) according to any one of the preceding claims, **characterised in that** it comprises the following successive steps:

a) a travel phase, when the vehicle (2) is travelling in conventional manner, in which the assistance device (1) is moved into road mode and in which the rear wheels (9) are straight or dependent on the front steering:

b) an approach phase, when the vehicle (3) begins its parking at a platform (2), in which the assistance device (1) is moved into parking mode, in which the rear wheels (9) remain in road mode whilst the front distance detector (15) has not detected the platform (2), and in which, when the front distance detector (15) detects the platform (2), the rear wheels (9) are controlled by the assistance device (1) and steered so that the rear axle (5) is moved in the direction of the platform (2);
c) a stoppage phase, when the vehicle (3) is parked at the platform (2);
d) a departure phase, when the vehicle (3) leaves the platform (2), in which the assistance device (1) is moved into parking mode and in which the rear wheels (9) are steered so that the rear axle (5) is moved away from the platform (2);
e) a travel phase, when the vehicle (3) travels in conventional manner after having finished leaving the platform (2), in which the assistance device (1) is moved in road mode and in which the rear wheels (9) are straight or dependent on the front steering.

21. Parking method according to the preceding claim, **characterised in that**, during the stoppage phase, the rear wheels (9) are controlled in order to be moved back into a non-steered position.

**FIG.1**

**FIG.2**

**FIG.3**

*FIG.4*

*FIG.5*

*FIG.6*

*FIG.7*

FIG.8

6   3   5

2

19   8   19

FIG.9

3

2

19   6   8   5   19

FIG.10

2

19   8   19

6   3   5

FIG.11

2

19   8

6   3   5   19

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2916721 A1